# EUROPEAN PATENT APPLICATION

(11) **EP 4 471 819 A1**
(43) Date of publication of application: **04.12.2024**
(21) Application number: 22923754.0
(22) Date of filing: 25.01.2022
(51) Int. Cl.: H01H 33/59

(54) **DIRECT-CURRENT LIMITER AND DIRECT-CURRENT INTERRUPTION SYSTEM**

(71) Applicant: Tohoku University, Sendai-shi, Miyagi 980-8577 (JP)
(72) Inventor: NISHIYAMA, Kanako, Sendai-shi, Miyagi 980-8577 (JP); NAGASAKI, Yoh, Sendai-shi, Miyagi 980-8577 (JP); TSUDA, Makoto, Sendai-shi, Miyagi 980-8577 (JP)
(74) Representative: Plougmann Vingtoft a/s
(86) International application number: PCT/JP2022/002669
(87) International publication number: WO 2023/144885

(57) **Abstract**

[Problem] To provide a direct-current limiter that can reliably limit the current even in the case of an accident where the current rises quickly, and a direct-current circuit breaker system that can more reliably interrupt a direct-current line.

[Solution] An LC parallel circuit 11a is inserted into a direct-current line 1 and has a first inductor 21 and a capacitor 22 connected in parallel to each other. A second inductor 23 is inserted into the direct-current line 1 and connected in series to the LC parallel circuit 11a. An interrupting unit 12 is configured to interrupt the current flowing through the direct-current line 1 when the passing current that has passed through the LC parallel circuit 11a and the second inductor 23 satisfies a predetermined condition.

## Description

### Field of the Invention

The present invention relates to a direct-current limiter and a direct-current circuit breaker system.

### Description of Related Art

Direct-current circuits, unlike alternating-current circuits, have no skin effect and are excellent in power transmission efficiency. Therefore, direct-current circuits are widely used in power networks for trains and similar devices. When an accident such as a short circuit occurs in a direct-current circuit, the current increases over time, making it more difficult to interrupt the circuit in proportion to the elapsed time. For this reason, in the event of an accident, it is necessary to interrupt the direct-current circuit at high speed. Therefore, in order to interrupt the direct-current circuit at high speed, a direct-current high-speed circuit breaker (HSCB) has been used. This breaker generates an explosive arc by opening the contacts to generate a voltage higher than the power supply voltage and limit and interrupt the fault current (see, for example, Non-Patent Literature 1).

### Citation List

### Non-Patent Literature

Non-Patent Literature 1: Nobumoto Tooya, Hiroshi Sasaki, Tomohiro Nakata, "High Speed Circuit Breaker for Railway Substation," Mitsubishi Denki giho, 2017, Vol. 91, No. 11, p. 39-43

### Summary of the Invention

However, the direct-current high-speed circuit breaker described in Non-Patent Literature 1 has a problem that, in the case of an accident where the current rises quickly, the current limiting does not occur in time, and the circuit breaker may fail to interrupt the current.

The present invention has been made in light of such problems, and an object thereof is to provide a direct-current limiter that can reliably limit the current even in the case of an accident where the current rises quickly and a direct-current circuit breaker system that can more reliably interrupt a direct-current line.

To achieve the above object, a direct-current limiter according to the present invention is a direct-current limiter for limiting a direct current in order to interrupt the direct current flowing through a direct-current line, including: an LC parallel circuit inserted in the direct-current line having a first inductor and a capacitor connected in parallel to each other; and a second inductor inserted in the direct-current line and connected in series to the LC parallel circuit.

The direct-current limiter according to the present invention operates according to the following principle. First, a constant direct current flows through the direct-current line in a normal state. At this time, in the LC parallel circuit inserted into the direct-current line, since no current flows through the capacitor, a current flows only through the first inductor. In addition, a current also flows through the second inductor inserted into the direct-current line and connected in series to the LC parallel circuit. Here, by reducing the resistance value of the first inductor and the second inductor to the direct current, it is possible to suppress the voltage generation in the LC parallel circuit and the second inductor in the normal state and reduce power loss.

Next, when an accident such as a short circuit occurs, the current flowing through the direct-current line changes. At this time, in the LC parallel circuit, since the capacitor has a smaller resistance value to the alternating current than the first inductor, a current starts to flow through the capacitor. In addition, a voltage is generated in the second inductor along with the change in current. As a result, a transient phenomenon occurs between the capacitor and the second inductor of the LC parallel circuit, and the current value flowing through the direct-current line increases and decreases. Therefore, even if the current value temporarily increases due to an accident, the current value can be reduced by the transient phenomenon, and the current can be reliably limited. In addition, since the maximum current Imax in the event of an accident can be suppressed, a time margin until the current is interrupted can be secured.

In the direct-current limiter according to the present invention, it is preferable that at least one of the first inductor and the second inductor is made of superconducting coils. In particular, when both the first inductor and the second inductor are made of superconducting coils, the resistance values of the first inductor and the second inductor to the direct current can be made almost zero. Therefore, almost no voltage is generated in the LC parallel circuit and the second inductor in the normal state, and power loss can be made almost zero. In addition, the amplitude of the increase and decrease in the current value due to the transient phenomenon that occurs in the event of an accident can be increased, and the minimum value of the current (current at the time of current limiting) can be reduced. In addition, even when only one of the first inductor and the second inductor is made of superconducting coils, power loss can be suppressed. In addition, since the inductance can be increased while the resistance value is almost zero, the first inductor can be made smaller and lighter by making the first inductor using a superconducting coil.

A direct-current circuit breaker system according to the present invention includes the direct-current limiter according to the present invention and an interrupting unit configured to interrupt the current flowing through the direct-current line when a passing current that has passed through the LC parallel circuit and the second inductor satisfies a predetermined condition.

The direct-current circuit breaker system according to the present invention can reliably interrupt the current, for example, by the direct-current limiter interrupting the current flowing through the direct-current line when the passing current that has passed through the LC parallel circuit and the second inductor satisfies a predetermined condition, such as when the passing current is limited by the direct-current limiter. Therefore, in the case of an accident where the current rises quickly, the direct-current line can be interrupted by limiting the current more reliably. The direct-current circuit breaker system can prevent an interruption failure because the direct-current limiter can suppress the maximum current Imax in the event of an accident and can ensure a time margin until the current is interrupted.

In the direct-current circuit breaker system according to the present invention, the interrupting unit may be any type capable of interrupting a direct-current line, but it is preferably made of a type capable of effectively interrupting a current that changes due to a transient phenomenon.

In the direct-current circuit breaker system according to the present invention, the interrupting unit may be configured to interrupt the current flowing through the direct-current line when the passing current becomes equal to or less than a predetermined current value. In this case, the current can be interrupted when the passing current is limited. In particular, the interrupting unit preferably interrupts the current flowing through the direct-current line when the passing current becomes zero amperes. This makes it possible to prevent the occurrence of an arc discharge when the current is interrupted. In this case, it is preferable that the interrupting unit is made of an alternating-current circuit breaker.

Furthermore, in the direct-current circuit breaker system according to the present invention, the interrupting unit may be configured to interrupt the current flowing through the direct-current line when the passing current varies by a predetermined value or more from a current value of the direct current. In this case, it is possible to detect the occurrence of an accident due to fluctuations in the passing current and interrupt the current.

In the direct-current circuit breaker system according to the present invention, the interrupting unit may be configured to interrupt the current flowing through the direct-current line when the passing current repeatedly increases and decreases with a predetermined amplitude or more. In this case, it is possible to detect the occurrence of an accident due to the occurrence of a transient phenomenon and interrupt the current.

According to the present invention, it is possible to provide a direct-current limiter that can reliably limit the current even in the case of an accident where the current rises quickly, and a direct-current circuit breaker system that can more reliably interrupt a direct-current line.

### Brief Description of the Drawings

FIG. 1 is a circuit diagram showing the use state of a direct-current limiter and a direct-current circuit breaker system according to an embodiment of the present invention.
FIG. 2 is a circuit diagram showing the operation principle of the direct-current limiter and the direct-current circuit breaker system according to an embodiment of the present invention, in which FIG. 2(a) shows a normal state and FIG. 2(b) shows the state in the event of an accident.
FIG. 3 is a circuit diagram used in the operation analysis of the direct-current limiter and the direct-current circuit breaker system according to an embodiment of the present invention.
FIG. 4 is a graph of current waveform data used in the analysis of the interruption operation of the direct-current limiter and the direct-current circuit breaker system according to the embodiment of the present invention.
FIG. 5 is a graph of current waveforms showing the analysis results of the interruption operation of the direct-current limiter and the direct-current circuit breaker system according to the embodiment of the present invention.
FIG. 6 is a graph of current waveforms showing the analysis results of current fluctuations in the direct-current limiter according to the embodiment of the present invention, in which FIG. 6(a) shows a case where the inductance L₁ of the first inductor is changed, FIG. 6(b) shows a case where the capacitance C of the capacitor is changed, and FIG. 6(c) shows a case where the inductance L₂ of the second inductor is changed.
FIG. 7 is a graph of current waveforms showing the analysis results of current fluctuations in the direct-current limiter according to the embodiment of the present invention, in which FIG. 7(a) shows a case where the resistance value R of the first inductor is changed, and FIG. 7(b) shows a case where the resistance value R of the second inductor is changed.

### Detailed Description of the Invention

Hereinafter, an embodiment of the present invention will be described based on the drawings.

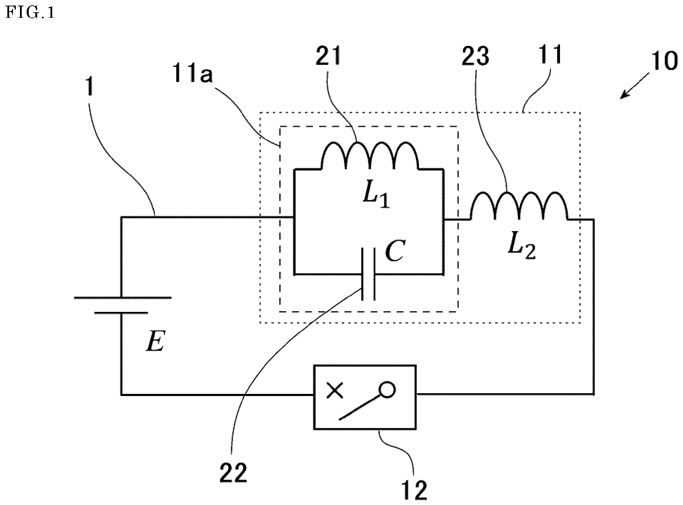

FIGS. 1 to 7 show a direct-current limiter and a direct-current circuit breaker system according to an embodiment of the present invention.

As shown in FIG. 1, a direct-current circuit breaker system 10 is a direct-current circuit breaker system for interrupting a direct current flowing through a direct-current line 1, and includes a direct-current limiter 11 and an interrupting unit 12.

The direct-current limiter 11 includes an LC parallel circuit 11a including a first inductor 21 and a capacitor 22, and a second inductor 23. The LC parallel circuit 11a is inserted into the direct-current line 1, and the first inductor 21 and the capacitor 22 are connected in parallel to each other. The second inductor 23 is inserted into the direct-current line 1 and connected in series to the LC parallel circuit 11a. The second inductor 23 may be connected to the upstream side or the downstream side of the direct current flowing through the direct-current line 1 with respect to the LC parallel circuit 11a. It is preferable that the first inductor 21 has a larger inductance than the second inductor 23. The first inductor 21 and the second inductor 23 preferably have a smaller resistance value to direct current, and are particularly preferably made of superconducting coils.

The interrupting unit 12 is inserted in the direct-current line 1. The interrupting unit 12 is connected on the downstream side of the direct current flowing through the direct-current line 1 with respect to the LC parallel circuit 11a and the second inductor 23. The interrupting unit 12 is configured to interrupt the current flowing through the direct-current line 1 when the passing current that has passed through the LC parallel circuit 11a and the second inductor 23 satisfies a predetermined condition. The interrupting unit 12 may be any type capable of interrupting the direct-current line 1, but is preferably made of a type capable of effectively interrupting a changing current.

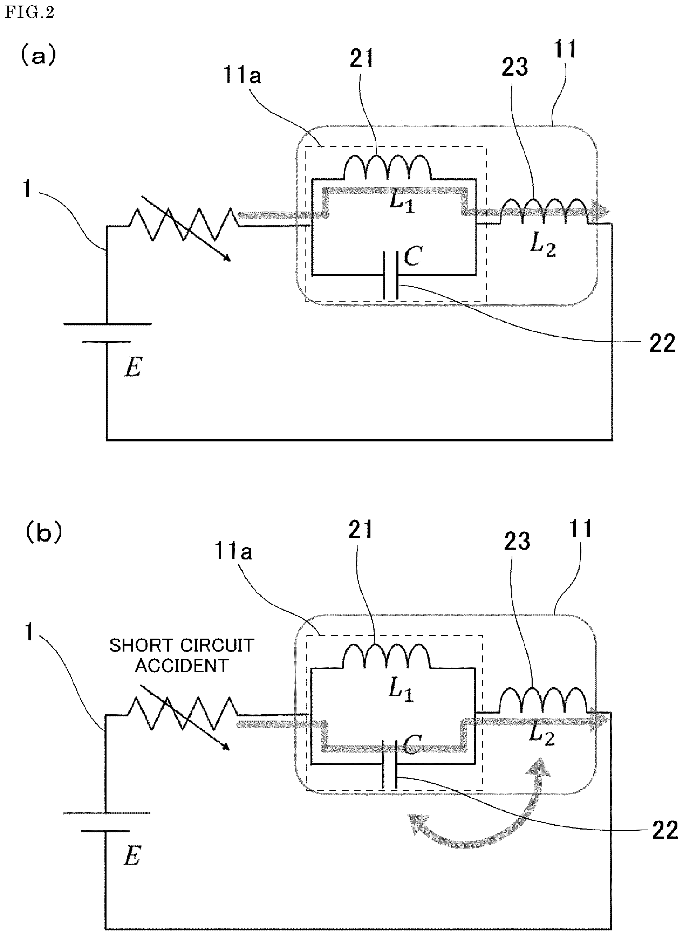

The direct-current limiter 11 and the direct-current circuit breaker system 10 operate according to the following principle. First, as shown in FIG. 2(a), a constant direct current flows through the direct-current line 1 in a normal state. At this time, in the LC parallel circuit 11a, since no current flows through the capacitor 22, a current flows only through the first inductor 21. A current also flows through the second inductor 23 connected in series to the LC parallel circuit 11a. Here, by reducing the resistance value of the first inductor 21 and the second inductor 23 to the direct current, it is possible to suppress the voltage generation in the LC parallel circuit 11a and the second inductor 23 in the normal state and reduce power loss. In particular, when both the first inductor 21 and the second inductor 23 are made of superconducting coils, it is possible to make the resistance value to the direct current almost zero, and to make power loss almost zero. Also, even if either the first inductor 21 or the second inductor 23 is a superconducting coil, it is possible to suppress power loss.

Next, as shown in FIG. 2(b), when an accident such as a short circuit occurs, the current flowing through the direct-current line 1 changes. At this time, in the LC parallel circuit 11a, since the capacitor 22 has a smaller resistance to the alternating current than the first inductor 21, a current starts to flow through the capacitor 22. In addition, a voltage is generated in the second inductor 23 along with the change in current. As a result, a transient phenomenon occurs between the capacitor 22 and the second inductor 23 of the LC parallel circuit 11a, and the current value flowing through the direct-current line 1 increases and decreases. Therefore, even if the current value temporarily increases due to an accident, the current value can be reduced by the transient phenomenon, and the current can be reliably limited. In particular, when the first inductor 21 and the second inductor 23 are made of superconducting coils, the amplitude of the increase and decrease in the current value due to the transient phenomenon occurring at the time of the accident can be increased, and the minimum value of the current (current at the time of current limiting) can be reduced.

When an accident such as a short circuit occurs, the current can be reliably interrupted by configuring the interrupting unit 12 so that the current is interrupted, for example, when any of the following conditions are met.

<Condition 1> When the passing current becomes equal to or less than a predetermined current value (for example, zero amperes).

<Condition 2> When the passing current fluctuates by a predetermined value or more from the current value of the direct current before the fluctuation.

<Condition 3> When the passing current repeatedly increases and decreases with a predetermined amplitude or more.

In the case of condition 1, the current can be interrupted when the passing current is limited. In particular, by interrupting the current when the passing current becomes zero amperes, it is possible to prevent arc discharge from occurring when the current is interrupted. By preventing arc discharge, it is possible to prevent wear on the contacts and arc chutes, noise during interruption, and damage to peripheral devices. In addition, since it is not necessary to secure an arc space, it is possible to reduce the size of the interrupting unit 12. In this case, an alternating-current circuit breaker can be used as the interrupting unit 12. In the case of condition 2, it is possible to detect the occurrence of an accident due to fluctuations in the passing current and interrupt the current. In the case of condition 3, it is possible to detect the occurrence of an accident due to the occurrence of a transient phenomenon and interrupt the current.

In this way, the direct-current circuit breaker system 10 can reliably interrupt the current by the interrupting unit 12 interrupting the current flowing through the direct-current line 1 when the passing current that has passed through the LC parallel circuit 11a and the second inductor 23 satisfies the predetermined conditions such as conditions 1 to 3. Therefore, even in the case of an accident where the current rises quickly, the direct-current line 1 can be interrupted by limiting the current more reliably. The direct-current circuit breaker system 10 can prevent an interruption failure because the direct-current limiter 11 can suppress the maximum current Imax in the event of an accident and can ensure a time margin until the current is interrupted.

### [Example 1]

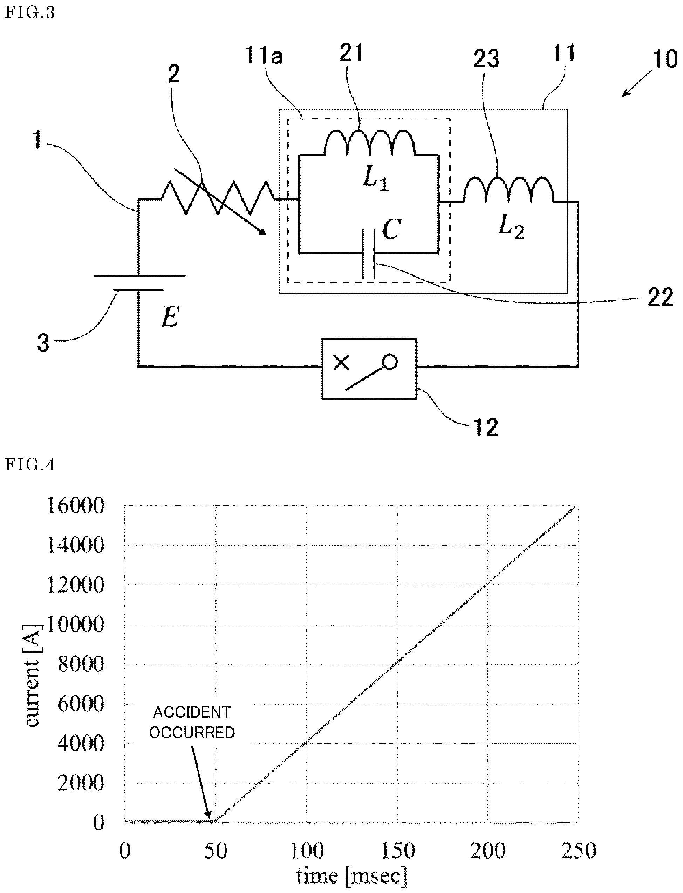

The operation of the direct-current limiter 11 and the direct-current circuit breaker system 10 was analyzed using commercially available analysis software "MATLAB^{®}/Simulink (manufactured by MathWorks, Inc.)". The circuit used for the analysis is shown in FIG. 3. The circuit in FIG. 3 is a circuit in which a variable resistor 2 is inserted in the direct-current line 1 of the circuit shown in FIG. 1 to represent the load of the power supply destination in a normal state and the load in the event of an accident such as a short circuit.

First, an analysis of the interruption operation was performed using current waveform data simulating a ground fault accident as accident data. The current waveform data used is shown in FIG. 4. In the data shown in FIG. 4, the rate of change of current over time dI/dt is constant at 80 kA/sec, and the current rises from a steady current of 100 A to 16000 A 200 msec after the occurrence of the accident. It was also assumed that the current would rise until the analysis was completed if the current was not interrupted. In the analysis, the data shown in FIG. 4 was input to the variable resistor 2. The voltage E of the power supply 3 was set to 1500 V, the inductance L₁ of the first inductor 21 to 1 H, the capacitance C of the capacitor 22 to 4.5 mF, and the inductance L₂ of the second inductor 23 to 0.03 H. In the analysis, the current was interrupted by the interrupting unit 12 when the passing current that has passed through the interrupting unit 12 became zero amperes. The resistance of the interrupting unit 12 was 0.001 Ω, and the conductance was 10⁻⁶ S.

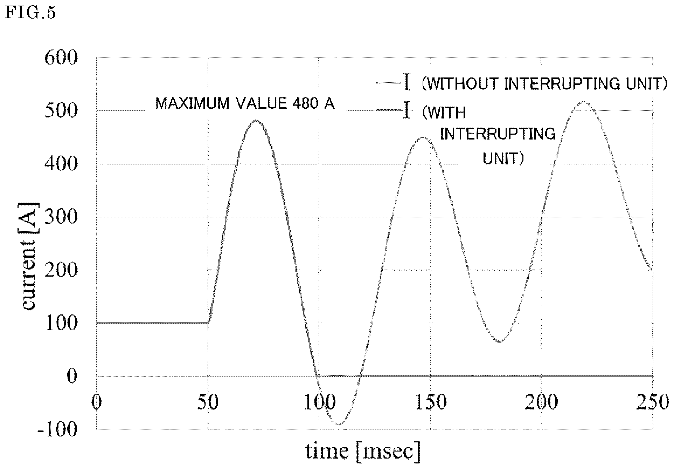

FIG. 5 shows the analyzed current waveform at the time of the accident. Note that FIG. 5 also shows the case where there is no interrupting unit 12 (where the current is not interrupted). As shown in FIG. 5, it was confirmed that the current value temporarily increases due to the short circuit accident, but the current decreases due to the transient phenomenon, and the current was reliably limited. It was also confirmed that the current was interrupted by the interrupting unit 12 the moment the passing current became zero amperes. Specifically, it was confirmed that the maximum current Imax was suppressed to 480 A. It was also confirmed that the current was interrupted within 100 msec (about 50 msec) after the accident occurred. Note that from the graph for the case where there is no interrupting unit 12, it was confirmed that the current value oscillates with the maximum current Imax suppressed due to the transient phenomenon. From this, it can be said that a time margin until interruption can be secured.

Next, the parameters of the inductance L₁ of the first inductor 21, the capacitance C of the capacitor 22, and the inductance L₂ of the second inductor 23 in the circuit were changed to analyze the current fluctuation. In the analysis, the data shown in FIG. 4 was used as the accident waveform data to be input to the variable resistor 2. In addition, the voltage E of the power supply 3 was set to 1500 V, and the interrupting unit 12 was not provided. Analysis was performed for three cases: a case where the inductance L₁ of the first inductor 21 was changed, a case where the capacitance C of the capacitor 22 was changed, and a case where the inductance L₂ of the second inductor 23 was changed. The values of the parameters used in the analysis for these three cases are shown in Table 1.

**[Table 1]**

| Case where L₁ is changed | | | Case where C is changed | | | Case where L₂ is changed | | |
|---|---|---|---|---|---|---|---|---|
| L₁ [H] | C [mF] | L₂ [H] | L₁ [H] | C [mF] | L₂ [H] | L₁ [H] | C [mF] | L₂ [H] |
| 0.8 | 4.5 | 0.03 | 1 | 3 | 0.03 | 1 | 4.5 | 0.09 |
| 1 | 4.5 | 0.03 | 1 | 5 | 0.03 | 1 | 4.5 | 0.05 |
| 1.2 | 4.5 | 0.03 | 1 | 7 | 0.03 | 1 | 4.5 | 0.01 |

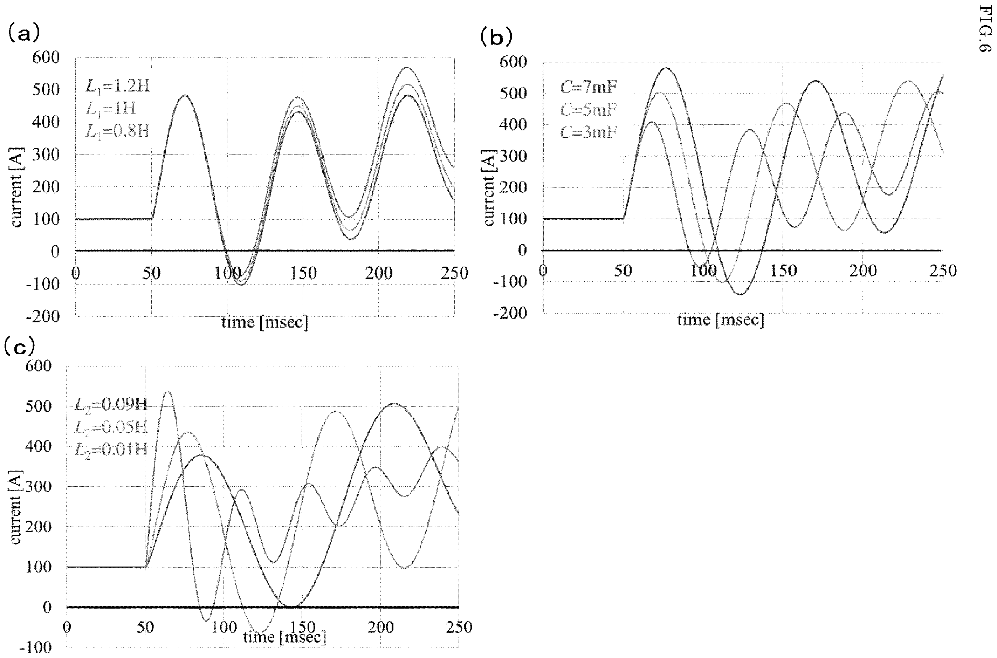

The current waveforms after the accident for the three cases shown in Table 1 are shown in FIG. 6(a) to 6(c), respectively. As shown in FIG. 6(a), it was confirmed that the amplitude of the current due to the transient phenomenon becomes smaller as the inductance L₁ of the first inductor 21 increases. It was also confirmed that the period of the current due to the transient phenomenon does not change even if the inductance L₁ changes. As shown in FIG. 6(b), it was confirmed that the amplitude of the current due to the transient phenomenon becomes larger and the period becomes longer as the capacitance C of the capacitor 22 increases. As shown in FIG. 6(c), it was confirmed that the initial amplitude of the current due to the transient phenomenon becomes smaller and the period becomes longer as the inductance L₂ of the second inductor 23 increases.

In addition, in all cases shown in FIGS. 6(a) to 6(c), it was confirmed that the minimum value of the current due to the transient phenomenon is zero amperes or less, but the minimum value changes depending on the value of each parameter. Therefore, for example, in order to interrupt the current when the current becomes zero amperes so that arc discharge during interruption is prevented, it is necessary to adjust the value of each parameter taking into account the value of the constant current in the normal state.

Next, an analysis of current fluctuations was performed in a case where the first inductor 21 or the second inductor 23 in the circuit has a resistance. In the analysis, the data shown in FIG. 4 was used as the accident data to be input to the variable resistor 2. In addition, the voltage E of the power supply 3 was set to 1500 V, the inductance L₁ of the first inductor 21 to 1H, the capacitance C of the capacitor 22 to 4.5 mF, and the inductance L₂ of the second inductor 23 to 0.03 H. In addition, the interrupting unit 12 was not provided. Analysis was performed for a case where the resistance value R of the first inductor 21 was changed in the range of 0 S2 to 40 S2 (the resistance value of the second inductor 23 was 0 S2) and for a case where the resistance value R of the second inductor 23 was changed in the range of 0 S2 to 10 S2 (the resistance value of the first inductor 21 was 0 S2).

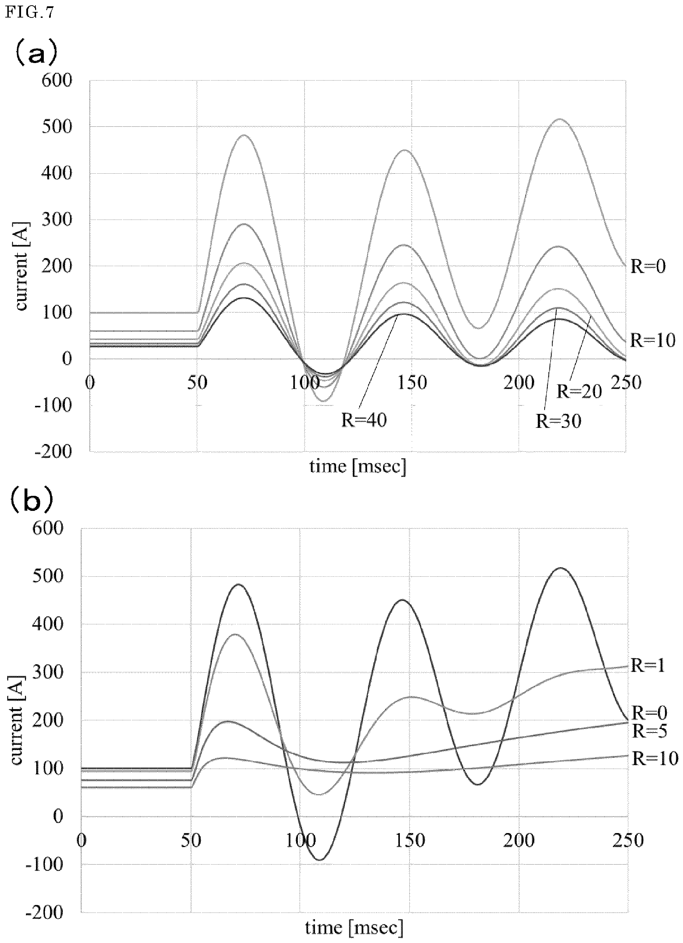

The current waveforms after the accident in each case are shown in FIGS. 7(a) and 7(b), respectively. As shown in FIG. 7(a), it was confirmed that the value of the constant current in the normal state becomes smaller and the amplitude of the current due to the transient phenomenon also becomes smaller as the resistance value of the first inductor 21 increases. Similarly, as shown in FIG. 7(b), it was confirmed that the value of the constant current in the normal state becomes smaller and the amplitude of the current due to the transient phenomenon also becomes smaller as the resistance value of the second inductor 23 increases. It was also confirmed that the resistance of the second inductor 23 has a greater effect on the amplitude of the current due to the transient phenomenon than the resistance of the first inductor 21.

From these results, it was confirmed that in order to reduce power loss in the normal state, it is necessary to reduce the resistance values of the first inductor 21 and the second inductor 23. In particular, it can be said that in order to reduce power loss to almost zero, it is necessary to use superconducting coils as the first inductor 21 and the second inductor 23. It was also confirmed that by using superconducting coils for the first inductor 21 and the second inductor 23, it is possible to increase the amplitude of the increase and decrease in the current value due to the transient phenomenon that occurs in the event of an accident, reduce the minimum value of the current (current at the time of current limiting), and make it easier to reduce the current to zero amperes or less. As a result, it can be said that it is possible to configure so that the current is interrupted when it becomes zero amperes, and it is possible to prevent the occurrence of arc discharge and make it easier to interrupt the current. In addition, by using superconducting coils, it is possible to increase the inductance while the resistance value is almost zero, and therefore it can be said that it is possible to reduce the size and weight of the first inductor 21, which has a particularly large inductance.

### Reference Signs List

- 1: Direct-current line
- 2: Variable resistor
- 3: Power supply
- 10: Direct-current circuit breaker system
- 11: Direct-current limiter
- 11a: LC parallel circuit
- 21: First inductor
- 22: Capacitor
- 23: Second capacitor
- 12: Interrupting unit

## Claims

1. A direct-current limiter for limiting a direct current in order to interrupt the direct current flowing through a direct-current line, comprising:
an LC parallel circuit having a first inductor and a capacitor connected in parallel to each other; and
a second inductor inserted in the direct-current line and connected in series to the LC parallel circuit.

2. The direct-current limiter according to claim 1, wherein at least one of the first inductor and the second inductor is made of superconducting coils.

3. A direct-current circuit breaker system comprising:
the direct-current limiter according to claim 1 or 2; and
an interrupting unit configured to interrupt the current flowing through the direct-current line when a passing current that has passed through the LC parallel circuit and the second inductor satisfies a predetermined condition.

4. The direct-current circuit breaker system according to claim 3, wherein the interrupting unit is configured to interrupt the current flowing through the direct-current line when the passing current becomes equal to or less than a predetermined current value.

5. The direct-current circuit breaker system according to claim 3, wherein the interrupting unit is configured to interrupt the current flowing through the direct-current line when the passing current becomes zero amperes.

6. The direct-current circuit breaker system according to claim 3, wherein the interrupting unit is configured to interrupt the current flowing through the direct-current line when the passing current varies by a predetermined value or more from a current value of the direct current.

7. The direct-current circuit breaker system according to claim 3, wherein the interrupting unit is configured to interrupt the current flowing through the direct-current line when the passing current repeatedly increases and decreases with a predetermined amplitude or more.
